(19) Europäisches Patentamt
European Patent Office
Office européen des brevets

(11) **EP 3 193 459 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(51) Int Cl.:
*H04B 3/46* (2015.01)   *H04L 12/26* (2006.01)

(21) Anmeldenummer: **16151591.1**

(22) Anmeldetag: **15.01.2016**

(54) **VERFAHREN UND SYSTEM ZUM PRÜFEN DER ÜBERTRAGUNGSQUALITÄT IN EINEM KOMMUNIKATIONSNETZWERK**

METHOD AND SYSTEM FOR TESTING THE TRANSMISSION QUALITY IN A COMMUNICATION NETWORK

PROCEDE ET SYSTEME DE VERIFICATION DE LA QUALITE DE TRANSMISSION DANS UN RESEAU DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.07.2017 Patentblatt 2017/29**

(73) Patentinhaber: **Deutsche Telekom AG**
**53113 Bonn (DE)**

(72) Erfinder: **Kessler, Steffen**
**57299 Burbach (DE)**

(74) Vertreter: **Blumbach · Zinngrebe Patent- und Rechtsanwälte**
**PartG mbB**
**Alexandrastraße 5**
**65187 Wiesbaden (DE)**

(56) Entgegenhaltungen:
**US-A1- 2007 041 324    US-A1- 2008 159 166**
**US-A1- 2011 234 200**

- **UCHINO M ET AL: "FREQUENCY STABILITY MEASURING TECHNIQUE USING DIGITAL SIGNAL PROCESSING", ELECTRONICS & COMMUNICATIONS IN JAPAN, PART I - COMMUNICATIONS, WILEY, HOBOKEN, NJ, US, Bd. 87, Nr. 1, PART 01, 31. Januar 2004 (2004-01-31), Seiten 21-33, XP001178331, ISSN: 8756-6621, DOI: 10.1002/ECJA.10097**

EP 3 193 459 B1

**Beschreibung**

Die Erfindung betrifft allgemein Kommunikationsnetzwerke und insbesondere ein Verfahren und ein System zum Prüfen der Übertragungsqualität in einem Kommunikationsnetzwerk, zum Beispiel hinsichtlich einer zumindest teilweise über ein paketorientiertes Netzwerk verlaufenden Übertragung.

In heutigen Kommunikationssystemen werden zur Sprach- und Videokommunikation zunehmend paketorientierte Netzwerke eingesetzt. Hierauf basiert beispielsweise die IP-Telefonie, auch als VoIP (Voice over Internet Protocol) bezeichnet. Paketorientierte Netzwerke sind beispielsweise LANs (Local Area Network), WANs (Wide Area Network) oder auch das Internet.

Bisher eingesetzte Netze wie ISDN (Integrated Services Digital Network) und IDN (Integriertes Text- und Datennetz) werden voraussichtlich in absehbarer Zeit abgeschaltet und durch IP-basierte Netze ersetzt werden.

Im ISDN und IDN gibt es eine synchrone Taktversorgung. Dadurch können die Endgeräte den Takt aus dem Empfangssignal ableiten und die Empfangssignale genau so ausgeben, wie sie am Endgerät auf der Gegenstelle gesendet wurden. Dies wird in den Endgeräten dadurch realisiert, dass der Takt für die beteiligten ICs auf den Netztakt synchronisiert wird, d.h. die Taktfrequenz durch den Netztakt vorgegeben wird.

Bei Einsatz einer IP-basierten Übertragung ist bis heute keine synchrone Übertragung bzw. die Ableitung eines Takts aus den Empfangssignalen möglich. Das bedeutet, dass die Taktfrequenzen in den Endgeräten nicht synchronisiert sind, was zu Übertragungsfehlern führt.

In US 2008/159166 A1 wird ein Verfahren und ein System zur Messung der Übertragungsqualität bei der Übertragung eines Audio- oder Videosignals zwischen zwei Endgeräten beschrieben, wobei die Übertragungsstrecke IP-Netzwerke und auch ein analoges Netzwerk umfasst.

Aus "Frequency stability measuring techniques using digital signal processing" von M. Uchino et al., Electronics & Communications in Japan, Part I - Communications, Wiley, Hoboken, NJ, US, Bd. 87, Nr. 1 , Part 01, 1. Januar 2004, Seiten 21-23, ist eine Methode zur Messung der Frequenzstabilität eines Oszillators bekannt, bei welcher das Oszillatorsignal mit einem Referenzsignal gemischt und einem Intervallzähler zugeführt wird.

Es ist die Aufgabe der vorliegenden Erfindung, einen Weg aufzuzeigen, wie Beeinträchtigungen der Übertragungsqualität oder Übertragungsfehler in einem Kommunikationsnetzwerk, welches zum Beispiel zumindest teilweise als paketorientiertes Netzwerk ausgebildet ist, erkannt werden können. Eine weitere Aufgabe der Erfindung besteht darin, einen Weg aufzuzeigen, wie Hinweise auf die Ursache erkannter Beeinträchtigungen der Übertragungsqualität oder Übertragungsfehler abgeleitet werden können.

Diese Aufgabe wird durch die Merkmale der unabhängigen Ansprüche gelöst. Vorteilhafte Ausführungsformen sind Gegenstand der abhängigen Ansprüche.

Ein Verfahren zum Prüfen der Übertragungsqualität einer Übertragung von einem ersten Netzwerkelement zu einem zweiten Netzwerkelement eines Kommunikationsnetzwerkes umfasst dementsprechend das Bereitstellen eines vorgegebenen Prüf-Audiosignals, das Übertragen des Prüf-Audiosignals vom ersten Netzwerkelement zum zweiten Netzwerkelement, das Bereitstellen eines Referenz-Audiosignals, und das Feststellen von Beeinträchtigungen der Übertragungsqualität der Übertragung des Prüf-Audiosignals in Abhängigkeit des empfangenen Prüf-Audiosignals und des Referenz-Audiosignals, wobei das empfangene Prüf-Audiosignal und das Referenz-Audiosignal zum Erzeugen eines Mischsignals gemischt werden und der Signalverlauf des erzeugten Mischsignals ausgewertet wird, wobei Beeinträchtigungen der Übertragungsqualität der Übertragung des Prüf-Audiosignals durch Erkennen von Amplitudenänderungen und/oder Phasensprüngen der Einhüllenden des Mischsignals erkannt werden, oder durch das Auswerten des Mischsignals ein Paketverlust erkannt wird, wobei das Kommunikationsnetzwerk (10) für die Erkennung des Paketverlustes zumindest teilweise als paketorientiertes Netzwerk ausgebildet ist. In einer vorteilhaften Ausgestaltung des Verfahrens kann das Feststellen von Beeinträchtigungen der Übertragungsqualität im zweiten Netzwerkelement erfolgen.

Ferner umfasst ein Netzwerkelement zum Einsatz in einem Kommunikationsnetzwerk, welches zum Prüfen der Übertragungsqualität einer Übertragung von einem weiteren Netzwerkelement des Kommunikationsnetzwerkes ausgebildet ist, dementsprechend Mittel zum Empfangen eines Prüf-Audiosignals von dem weiteren Netzwerkelement, Mittel zum Bereitstellen eines Referenz-Audiosignals, einen Signalmischer zum Erzeugen eines Mischsignals aus dem empfangenen Prüf-Audiosignal und dem Referenz-Audiosignal, und eine Auswerteeinheit, welche dazu ausgebildet ist, Beeinträchtigungen der Übertragungsqualität der Übertragung des Prüf-Audiosignals in Abhängigkeit des empfangenen Prüf-Audiosignals und des Referenz-Audiosignals festzustellen, wobei Beeinträchtigungen der Übertragungsqualität der Übertragung des Prüf-Audiosignals durch Erkennen von Amplitudenänderungen und/ oder Phasensprüngen der Einhüllenden des Mischsignals erkannt werden, oder durch das Auswerten des Mischsignals ein Paketverlust erkannt wird, wobei das Kommunikationsnetzwerk (10) für die Erkennung des Paketverlustes zumindest teilweise als paketorientiertes Netzwerk ausgebildet ist.

Die Erfindung wird nachfolgend anhand einiger Ausführungsbeispiele in Verbindung mit den Zeichnungen näher erläutert. Es zeigen:

Fig. 1    schematisch eine bevorzugte Ausführungsform eines erfindungsgemäßen Kommunikationssystems,

Fig. 2    schematisch eine bevorzugte Ausführungsform eines erfindungsgemäßen, in dem in Fig. 1 dargestellten Kommunikationssystem einsetzbaren Netzwerkelementes, welches als Teilnehmerendgerät ausgebildet ist,

Fig. 3    ein erster beispielhafter Signalverlauf eines aus einem empfangenen Prüf-Audiosignal und einem Referenz-Audiosignal erzeugten Mischsignals, welcher keinen Hinweis auf einen Übertragungsfehler gibt,

Fig. 4    ein zweiter beispielhafter Signalverlauf eines aus einem empfangenen Prüf-Audiosignal und einem Referenz-Audiosignal erzeugten Mischsignals, welcher auf einen Unterschied der sender- und empfangsseitigen zur A/D- bzw. D/A-Wandlung eingesetzten Taktfrequenzen hinweist,

Fig. 5    ein dritter beispielhafter Signalverlauf eines aus einem empfangenen Prüf-Audiosignal und einem Referenz-Audiosignal erzeugten Mischsignals, welcher zusätzlich auf einen Paketverlust hinweist.

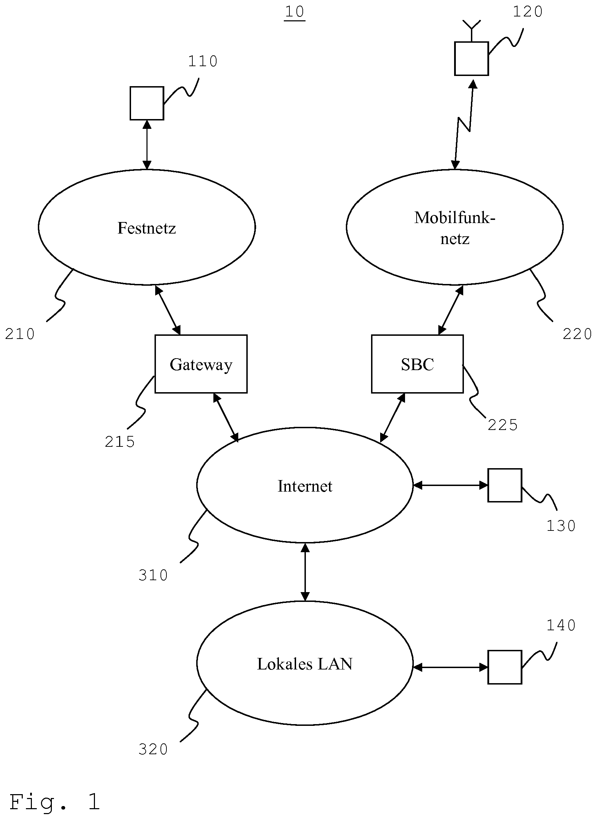

Das in Fig. 1 dargestellte Kommunikationsnetzwerk 10 ist beispielhaft zumindest teilweise als paketorientiertes Netzwerk ausgebildet. Im dargestellten Beispiel umfasst es ein LAN 320, welches an das Internet 310 angeschlossen ist. Im dargestellten Ausführungsbeispiel umfasst das Kommunikationsnetzwerk 10 ferner ein Festnetz 210 und ein Mobilfunknetz 220, wobei das Festnetz 210 über ein entsprechendes Gateway 215 und das Mobilfunknetz 220 über einen Session Border Controller (SBC) 225 an das Internet angebunden sind, wobei das Gateway 215 insbesondere als VoIP-Gateway ausgebildet ist.

Beispielhaft sind vier als Teilnehmerendgeräte ausgebildete Netzwerkelemente 110, 120, 130 und 140 dargestellt, wobei beispielsweise das Netzwerkelement 110 als analoges Telekommunikationsendgerät, das Netzwerkelement 120 als Mobiltelefon, sowie die Netzwerkelemente 130 und 140 als VoIP-fähige Telekommunikationsendgeräte ausgebildet sind.

Selbstverständlich umfasst das Kommunikationsnetzwerk 10 typischerweise eine Vielzahl weiterer, nicht dargestellter Endgeräte. Ferner umfassen das Internet 310, das LAN 320, sowie das Festnetz 210 und das Mobilfunknetz 220, eine Vielzahl nicht dargestellter Netzwerkelemente.

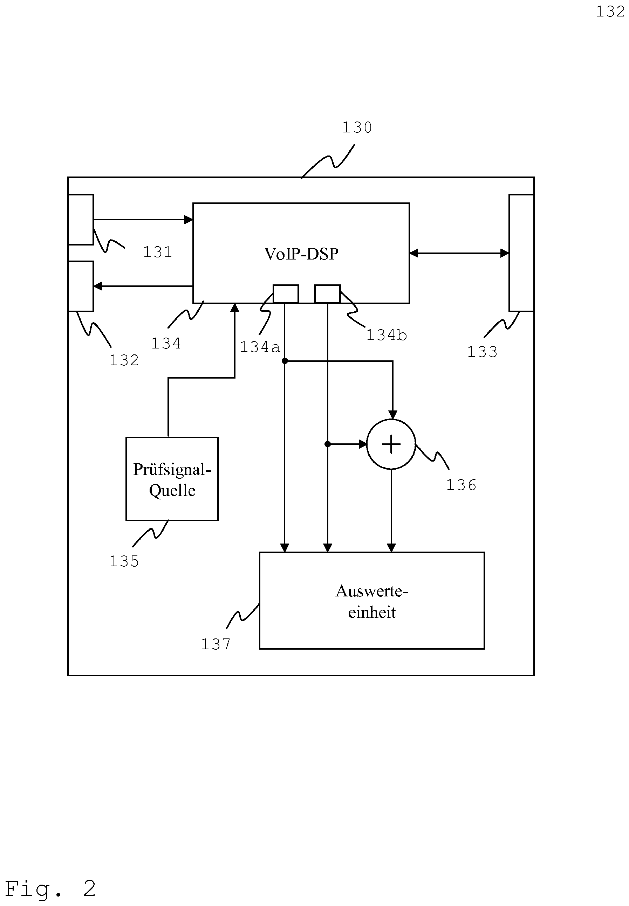

In Fig. 2 ist schematisch der Aufbau des in Fig. 1 dargestellten Teilnehmerendgerätes 130 dargestellt, welches als VoIP-fähiges Telekommunikationsendgerät ausgebildet ist, und im dargestellten Ausführungsbeispiel einen digitalen Signalprozessor 134 umfasst, welcher mit einer Schnittstelle 131 zum Anschließen eines Mikrofons, einer Schnittstelle 132 zum Anschließen eines Lautsprechers, sowie einer Ethernet-Schnittstelle 133 zum Anschließen an ein IP-basiertes Netzwerk verbunden ist. Zusätzlich umfasst das Netzwerkelement 130 eine Prüfsignalquelle 135 zum Bereitstellen eines Audiosignals, wobei dieses vom digitalen Signalprozessor 134 als Prüf-Audiosignal zu einem weiteren Netzwerkelement übertragen oder als Referenz-Audiosignal genutzt werden kann.

Das Netzwerkelement 130 umfasst ferner eine Auswerteeinheit 137, welche dazu ausgebildet ist, in Abhängigkeit eines von einem weiteren Netzwerkelement empfangenen Prüf-Audiosignals und eines Referenz-Audiosignals Beeinträchtigungen der Übertragungsqualität der Übertragung des empfangenen Prüf-Audiosignals festzustellen. Im dargestellten Ausführungsbeispiel wird das Prüf-Audiosignal über die Ethernet-Schnittstelle 133 empfangen, insbesondere in Form einer VoIP-Datenübertragung. Das Netzwerkelement 130 ist ferner vorzugsweise dazu ausgebildet, das bereitgestellte Referenz-Audiosignal als Prüf-Audiosignal zu einem weiteren Netzwerkelement des Kommunikationsnetzwerkes zu übertragen.

Das weitere Netzwerkelement, welches das Prüf-Audiosignal zum Netzwerkelement 130 überträgt, kann in gleicher Weise wie das Netzwerkelement 130 aufgebaut sein, es kann aber auch nur dazu ausgebildet ein, ein Prüf-Audiosignal bereitzustellen und zu senden, ohne über eine Auswerteeinheit zu verfügen.

Das Verfahren zum Prüfen der Übertragungsqualität einer Übertragung von einem ersten Netzwerkelement zu einem zweiten Netzwerkelement eines Kommunikationsnetzwerkes sieht vor, dass ein vorgegebenes Prüf-Audiosignal bereitgestellt wird, das Prüf-Audiosignal vom ersten Netzwerkelement zum zweiten Netzwerkelement übertragen wird und Beeinträchtigungen der Übertragungsqualität der Übertragung des Prüf-Audiosignals oder Übertragungsfehler in Abhängigkeit des empfangenen Prüf-Audiosignals und eines bereitgestellten Referenz-Audiosignals festgestellt werden. Im dargestellten Ausführungsbeispiel werden die Beeinträchtigungen der Übertragungsqualität im zweiten Netzwerkelement festgestellt. Das in Fig. 2 dargestellte Netzwerkelement 130 kann in dem Verfahren beispielsweise als erstes oder als zweites Netzwerkelement eingesetzt werden.

Als erstes oder zweites Netzwerkelement kann auch beispielsweise eines der weiteren in Fig. 1 dargestellten Netzwerkelemente oder auch ein in Fig. 1 nicht dargestelltes Netzwerkelement, welches an eines der in Fig. 1 dargestellten Netzwerke 210, 220, 310 bzw. 320 angeschlossen ist oder innerhalb eines der Netzwerke 210, 220, 310 bzw. 320 angeordnet ist, eingesetzt werden.

Es sei angemerkt, dass das Verfahren mit Vorteil auch vorsehen kann, dass die Übertragung zwischen dem ersten und zweiten Netzwerkelement nicht, auch nicht teilweise, über ein paketorientiertes Netzwerk erfolgt, sondern beispielsweise ausschließlich über das Festnetz 210 erfolgt.

Das erste und/oder das zweite Netzwerkelement kann jeweils den Endpunkt einer Übertragungsstrecke zur Übertragung des Prüf-Audiosignals bilden. Die Übertragung des Prüf-Audiosignals von dem ersten Netzwerkelement zu dem zweiten Netzwerkelement kann aber auch einen Übertragungsabschnitt einer Übertragung des Prüf-Audiosignals zwischen zwei Netzwerkelementen bilden, von denen zumindest eines nicht das erste oder zweite Netzwerkelement, sondern ein weiteres Netzwerkelement ist.

Für den Fall, dass das erste Netzwerkelement den Endpunkt einer Übertragungsstrecke zur Übertragung des Prüf-Audiosignals bildet, ist vorteilhaft vorgesehen, dass das vorgegebene Prüf-Audiosignal im ersten Netzwerkelement bereitgestellt wird.

In einer vorteilhaften Ausgestaltung des Verfahrens kann ferner vorgesehen sein, dass das Referenz-Audiosignal im zweiten Netzwerkelement bereitgestellt wird, beispielsweise mittels der in Fig. 2 dargestellten Prüfsignalquelle 135. In diesem Fall kann ferner das Feststellen von Beeinträchtigungen der Übertragungsqualität der Übertragung des Prüf-Audiosignals vorteilhaft im zweiten Netzwerkelement erfolgen, beispielsweise mittels der in Fig. 2 dargestellten Auswerteeinheit 137.

Als Referenz-Audiosignal kann jedoch beispielsweise auch ein vom ersten Netzwerkelement empfangenes Prüf-Audiosignal eingesetzt werden, welches das erste Netzwerkelement von einem weiteren Netzwerkelement empfängt, wobei das erste Netzwerkelement das empfangene Prüf-Audiosignal an das zweite Netzwerkelement weiterleitet.

Vorteilhaft kann mit dem beschriebenen Verfahren somit eine Verbindungsstrecke zwischen zwei Netzwerkelementen abschnittsweise auf Beeinträchtigungen geprüft werden, wobei der jeweilige zu prüfende Abschnitt durch das erste und zweite Netzwerkelement begrenzt wird. Dies ist besonders vorteilhaft, wenn das Prüf-Audiosignal über mehrere Netzwerke übertragen wird, die von unterschiedlichen Providern verwaltet werden.

Das Prüf-Audiosignal kann somit vorteilhaft an mehreren Punkten entlang einer Übertragungsstrecke aufgezeichnet und analysiert werden. Auf diese Weise können Beeinträchtigungen der Übertragungsqualität in Abhängigkeit von an verschiedenen Messpunkten durchgeführten Aufzeichnungen des Prüf-Audiosignals ermittelt werden, wobei die Messpunkte jeweils durch das erste und zweite Netzwerkelement gebildet werden.

Zum Feststellen von Beeinträchtigungen der Übertragungsqualität bzw. von Übertragungsfehlern sieht das Verfahren besonders vorteilhaft vor, das empfangene Prüf-Audiosignal und das Referenz-Audiosignal zum Erzeugen eines Mischsignals zu mischen und den Signalverlauf des erzeugten Mischsignals auszuwerten. Zu diesem Zweck umfasst das Netzwerkelement 130 vorteilhaft einen Signalmischer 136 zum Erzeugen eines Mischsignals aus dem empfangenen Prüf-Audiosignal und dem Referenz-Audiosignal. In dem in Fig. 2 dargestellten Ausführungsbeispiel weist der digitale Signalprozessor 134 zu diesem Zweck zwei Schnittstellen 134a und 134b auf, wobei an der Schnittstelle 134a das empfangene Prüf-Audiosignal und an der Schnittstelle 134b das Referenz-Audiosignal bereitgestellt werden. Die Schnittstellen 134a und 134b sind jeweils sowohl mit einem Eingang des Signalmischers 136 verbunden, sowie direkt mit der Auswerteeinheit 137. Ferner ist der Ausgang des Signalmischers 136 mit der Auswerteeinheit 137 verbunden, so dass der Auswerteeinheit 137 im dargestellten Ausführungsbeispiel das empfangene Prüf-Audiosignal, das Referenz-Audiosignal, sowie das durch den Signalmischer 136 erzeugte Mischsignal zugeführt werden.

Das durch den Signalmischer 136 durchgeführte Mischen ist vorzugsweise ein additives oder subtraktives Zusammenführen der Signale. In dem in Fig. 2 dargestellten Ausführungsbeispiel eines Netzwerkelementes 130 ist der Signalmischer als Signaladdierer ausgebildet.

Es sei angemerkt, dass das Senden des Prüf-Audiosignals, das Aufzeichnen eines empfangenen Prüf-Audiosignals, das Mischen eines empfangenen oder aufgezeichneten Prüf-Audiosignals, sowie die Analyse, d.h. das Feststellen von Beeinträchtigungen der Übertragungsqualität der Übertragung des Prüf-Audiosignals oder das Feststellen eines Übertragungsfehlers durch ein mobiles Testgerät, welches beispielsweise als Laptop ausgebildet ist, durchgeführt werden kann. Es sei ferner angemerkt, dass das erste oder zweite Netzwerkelement durch das mobile Testgerät gebildet sein kann.

In einer besonders vorteilhaften Ausführungsform des Verfahrens wird das Prüf-Audiosignal und das Referenz-Audiosignal jeweils durch einen Sinuston vorgegebener gleicher Frequenz gebildet. Die Prüfsignalquelle 135 kann dementsprechend vorteilhaft als Sinusgenerator ausgebildet sein oder als Speicher, in welchem eine vorgegebene Audio-Datei gespeichert ist, beispielsweise in Form einer WAV-Datei.

Um Beeinträchtigungen der Übertragungsqualität, die zu Übertragungsfehlern im Testbetrieb, d.h. bei der Übertragung des Prüf-Audiosignals, geführt haben oder zu Übertragungsfehlern im Normalbetrieb des jeweiligen Netzwerkelementes führen können, zu identifizieren, wird somit ein vorher festgelegtes Signal, wie zum Beispiel ein Sinussignal einer vorgegebenen Frequenz, beispielsweise 800 Hz, von einem Endgerät zu einer Gegenstelle gesendet. An der Gegenstelle wird das Empfangssignal aufgezeichnet. Für die Analyse wird anschließend vorteilhaft das Referenz- und das Empfangssignal gemischt. Die Analyse kann beispielsweise in der Auswerteeinheit 137 des Netzwerkelementes 130 erfolgen. Die Analyse sowie das Erzeugen des Mischsignals kann aber auch in Abhängigkeit eines aufgezeichneten Empfangs-Audiosignals und eines Referenz-Audiosignals in einer separaten Vorrichtung erfolgen, welcher die entsprechenden aufgezeichneten Signale auf geeignete Weise zur Verfügung gestellt werden.

Es sei angemerkt, dass das Verfahren auch automatisch ablaufen kann, beispielsweise gesteuert durch einen zentralen Test-Server, wobei automatisch der Aufbau einer Verbindung zwischen dem ersten und zweiten Netzwerkelement und das Übertragen des Prüf-Audiosignals vom ersten Netzwerkelement zum zweiten Netzwerkelement bewirkt wird. In dieser Ausführungsform des Verfahrens kann die Analyse, d.h. das Feststellen von Beeinträchtigungen der Übertragungsqualität in Abhängigkeit des im zweiten Netzwerkelement empfangenen Prüf-Audiosignals und des im zweiten Netzwerkelement bereitgestellten Referenz-Audiosignals, beispielsweise im zweiten Netzwerkelement erfolgen, wobei das Analyseergebnis vorzugsweise zum zentralen Test-Server übertragen wird, oder es kann in Abhängigkeit eines aufgezeichneten Empfangs-Audiosignals und eines Referenz-Audiosignals im zentralen Test-Server erfolgen. Es sei ferner angemerkt, dass die Funktion des beschriebenen Test-Servers auch durch ein mobiles Testgerät, wie beispielsweise ein Laptop bereitgestellt werden kann.

Bei der Übertragung des Prüf-Audiosignals kann in unterschiedlichen Netzwerkelementen eine A/D- und eine D/A-Wandlung des Signals erfolgen, wobei diese Wandlung jeweils mit Taktfrequenzen erfolgt, die durch Quarze erzeugt werden, die in den für die Wandlung eingesetzten ICs angeordnet sind. Dabei kann die A/D-Wandlung im ersten Netzwerkelement und die D/A-Wandlung im zweiten Netzwerkelement erfolgen. Die A/D- oder D/A-Wandlung kann aber auch in einem weiteren Netzwerkelement entlang des Übertragungsweges erfolgen, wenn zum Beispiel ein an das Festnetz 210 angeschlossenes analoges Teilnehmerendgerät an der Kommunikation beteiligt ist und eine Wandlung im Gateway 215 erfolgt.

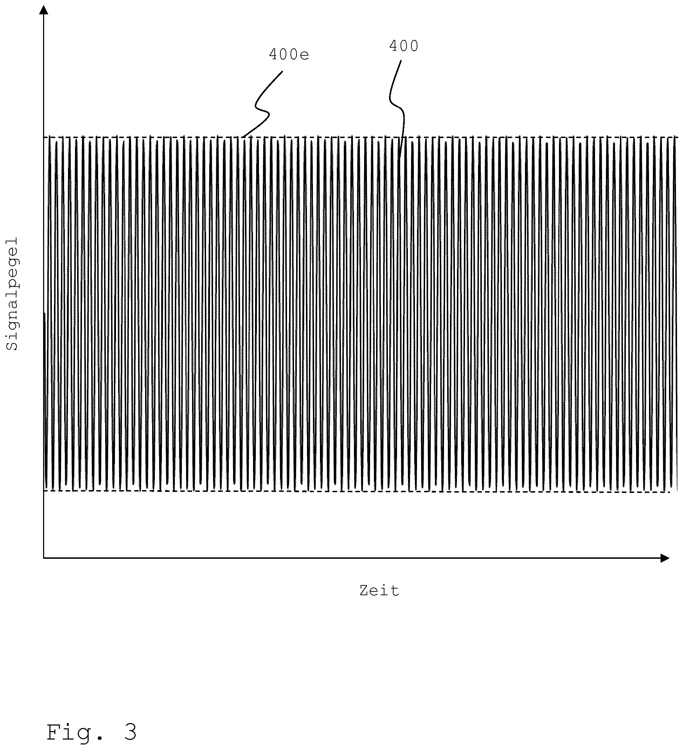

Wenn das Ergebnis der Mischung, wie in Fig. 3 schematisch dargestellt, ein Signal 400 ist, welches gleichmäßig in Amplitude ohne Phasenverschiebung ist, d.h. die Einhüllende 400e im Wesentlichen konstant ist, liegen keine Übertragungsfehler vor und die Quarze der an der A/D- bzw. D/A-Wandlung beteiligten ICs sind synchron, d.h. weisen eine im Wesentlichen gleiche Taktfrequenz und keine andere Beeinträchtigung auf.

In den Figuren 3, 4 und 5 ist jeweils schematisch und idealisiert der Signalpegel des Mischsignals in Abhängigkeit der Zeit dargestellt, wobei Signalpegel und Zeit jeweils in willkürlichen Einheiten angegeben sind.

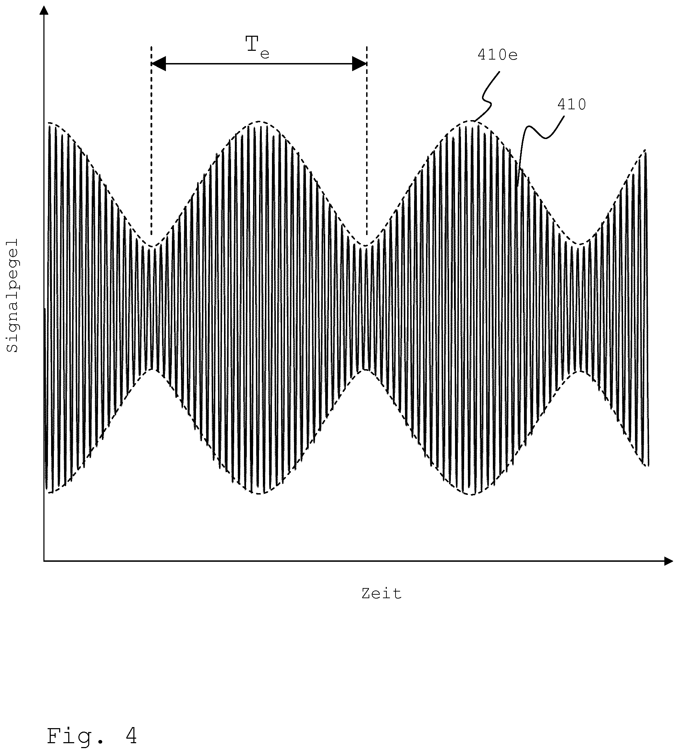

Driften die beiden Taktfrequenzen auseinander, so dass sich die Taktfrequenzen voneinander unterscheiden, so ergibt sich als Mischsignal ein sich kontinuierlich änderndes Signal, da dadurch die vorgegebene Frequenz des Prüf-Audiosignals oder des Referenz-Audiosignals nicht korrekt wiedergegeben wird. Es ergibt sich dann ein Mischsignal 410 wie es in Fig. 4 dargestellt ist, welches eine Schwebung aufweist. Um auch kleine Unterschiede in den Taktfrequenzen erkennen zu können, muss die Messung gegebenenfalls über einen längeren Zeitraum, beispielsweise über mehrere Minuten oder auch Stunden durchgeführt werden.

Der Betragsverlauf der Einhüllenden 410e gibt die sogenannte Schwebungsfrequenz $f_e$ wieder, wobei $f_e$ gegeben ist durch $f_e = |f_1 - f_2|$, wobei $f_1$ und $f_2$ die Frequenzen der Signale bezeichnen, aus denen das Mischsignal erzeugt wird, d.h. des Prüf-Audiosignals und des Referenz-Audiosignals. Im fehlerfreien Fall gilt beispielsweise $f_1 = f_2 = 800$ Hz.

In dem in Fig. 4 dargestellten Beispiel sei die Schwebungsperiode $T_e = 240{,}5$ Sekunden. Wird beispielsweise als Codec G.711 verwendet, beträgt die Abtastung 8000 pro Sekunde. Für eine Wellenlänge des Prüf- bzw. Referenz-Audiosignal ergeben sich daraus 10 Abtastungen pro Wellenlänge. Der anteilige Unterschied der Frequenzen der Signale, aus denen das Mischsignal erzeugt wird, entspricht dem anteiligen Unterschied der Taktfrequenzen. Hieraus lässt sich der anteilige Unterschied $d_T$ der Taktfrequenzen wie folgt berechnen:

$$d_T = |f_1 - f_2| \ / \ f_1$$

Mit $f_1 \approx 800$ Hz ergibt sich

$$d_T \approx f_e \ / \ 800 \text{ Hz} = (1/T_e) \ / \ 800 \text{ Hz}$$
$$= (1/240{,}5 \text{ Sekunden}) \ / \ 800 \text{ Hz}$$
$$= 5{,}197 * 10^{-6}$$

Das Verfahren ermöglicht somit vorteilhaft, dass durch das Auswerten des Mischsignals ein Unterschied der im ersten und zweiten Netzwerkelement zur A/D- oder D/A-Wandlung eingesetzten Taktfrequenzen erkannt wird, wobei insbesondere ein Maß für den Unterschied der Taktfrequenzen ermittelt wird.

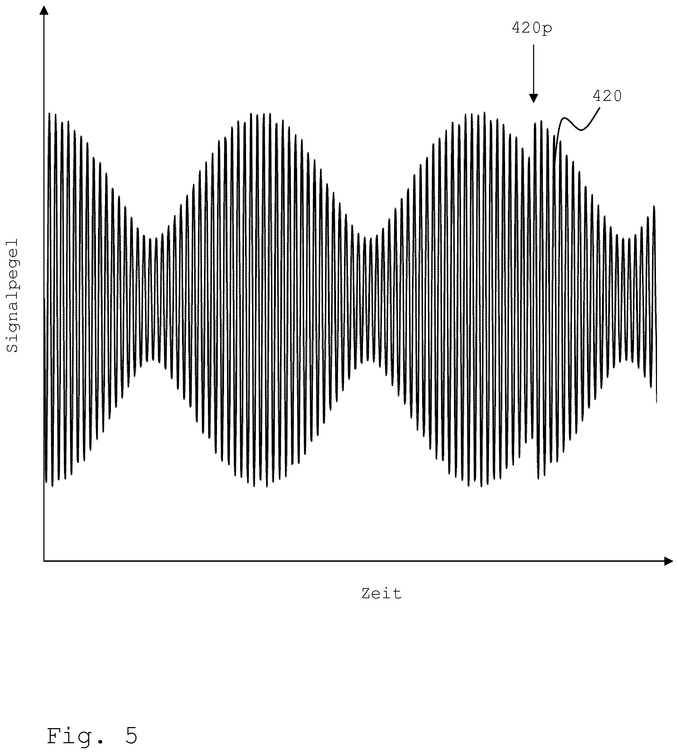

Aus dem Mischsignal lassen sich ferner leicht die Zeitpunkte ermitteln, an denen durch Übertragungsfehler verursachte Änderungen aufgetreten sind. Dies ist beispielhaft in Fig. 5 dargestellt. Vorzugsweise wird das Prüf-Audiosignal zumindest abschnittsweise mittels VoIP übertragen. Der Signalverlauf des in Fig. 5 dargestellten Mischsignals 420 weist einen Phasensprung 420p auf, welcher beispielsweise durch einen Paketverlust bei einer VoIP-Übertragung verursacht wird.

Somit sieht das Verfahren ferner vorteilhaft vor, dass durch das Auswerten des Mischsignals ein Paketverlust erkannt wird.

Auch durch die direkte Analyse des Empfangssignals lassen sich Rückschlüsse auf den Übertragungsfehler ziehen, zum Beispiel kann ein Paketverlust bei einer VoIP-Übertragung auch aus dem sich ergebenden Phasensprung im Empfangssignal geschlussfolgert werden. Im Mischsignal ist der Phasensprung 420p jedoch sehr viel leichter erkennbar. Aus dem gemischten Signal lassen sich somit verschiedene Übertragungsfehler auf einfache Weise ableiten.

Da bei Erkennen eines Phasensprungs unter Umständen keine sichere Aussage darüber getroffen werden kann, ob der Phasenversatz gegebenenfalls größer als eine Periode des jeweiligen Prüf-Audiosignals ist, ist vorteilhaft vorgesehen, das beschriebene Verfahren für unterschiedliche Prüf-Audiosignale und jeweils korrespondierende Referenz-Audiosignale zu wiederholen. Insbesondere ist vorteilhaft vorgesehen, dass das Prüf-Audiosignal und das Referenz-Audiosignal jeweils durch einen Sinuston vorgegebener gleicher Frequenz gebildet ist, wobei das Verfahren wiederholt durchgeführt wird und bei jeder Wiederholung jeweils die vorgegebene gleiche Frequenz variiert wird. Beispielsweise werden nacheinander für das Prüf-Audiosignal und das Referenz-Audiosignal jeweils Sinustöne im Sprachband von 300 Hz bis 3400 Hz mit unterschiedlichen Frequenzen und gleichem Frequenzabstand eingesetzt, zum Beispiel 400 Hz, 800 Hz, 1200 Hz, ... , 3200 Hz.

Das Verfahren sieht somit vorteilhaft vor, dass Beeinträchtigungen der Übertragungsqualität der Übertragung des Prüf-Audiosignals durch Erkennen von Amplitudenänderungen und/oder Phasensprüngen der Einhüllenden des Mischsignals erkannt werden.

Mit dem beschriebenen Verfahren lässt sich somit die fehlerfreie Übertragung der Signale und Fehler nachweisen. Das Verfahren ermöglicht auch Rückschlüsse auf die Fehlerursache zum Beispiel in der IP-Übertragung (Paketverlust, Jitter oder Delay). Weiterhin lassen sich die Taktunterschiede in den Endgeräten bzw. Gateways mit dem Verfahren nachweisen und die Taktdifferenz berechnen. Durch weitere Aufzeichnungen an verschiedenen Messpunkten entlang der Übertragungsstecke können Übertragungsfehler sowie deren Art vorteilhaft einzelnen Komponenten oder Übertragungsabschnitten zugeordnet werden.

Insbesondere bei der Übertragung von Sprachsignalen wird in der Regel eine Echokompensation durchgeführt, um Echo oder Halleffekte bei gleichzeitigem Senden und Empfangen von Signalen, beispielsweise aufgrund von Rückkopplungen oder Übersprechen, zu unterdrücken oder zu beseitigen. Es können beispielsweise spezielle Filter zur Echounterdrückung eingesetzt werden oder eine Subtraktion eines geschätzten Echosignals durchgeführt werden, beispielsweise mittels eines Signalprozessors.

Bei der Übertragung von Sprache kann ferner eine Sprechpausenerkennung (VAD; Voice Activity Detection) eingesetzt werden, um beispielsweise während Sprechpausen unnötige Kodierung und Übertragung von inhaltsleeren Datenpaketen in IP-Telefonie-Anwendungen zu vermeiden. Um jedoch den Eindruck eines Verbindungsabbruchs zu verhindern, ist es üblich, zur Füllung von Sprechpausen im Rahmen der digitalen Signalverarbeitung ein sogenanntes Komfortrauschen (Comfort Noise) künstlich zu erzeugen.

Sollen hingegen keine Sprachsignale, sondern digitale Daten übertragen werden, führen die oben beschriebenen Maßnahmen wie Echokompensation und Komfortrauschen zu Übertragungsfehlern und müssen daher abgeschaltet werden. Zu diesem Zweck erfolgt eine entsprechende Signalisierung vor der Datenübertragung. Eine Faxübertragung gemäß dem G3-Faxstandard wird dem Empfänger durch den Sender beispielsweise durch Senden eines Signals der Frequenz 1100 Hz signalisiert.

Falls diese Abschaltung nicht korrekt funktioniert, kann dies durch das oben beschriebene Verfahren erkannt werden, indem vor Übertragen des Prüf-Audiosignals eine entsprechende Signalisierung durchgeführt wird.

**Patentansprüche**

1. Verfahren zum Prüfen der Übertragungsqualität einer Übertragung von einem ersten Netzwerkelement (110, 120, 130, 140) zu einem zweiten Netzwerkelement (110, 120, 130, 140) eines Kommunikationsnetzwerkes (10), mit den Schritten:

 a) Bereitstellen eines vorgegebenen Prüf-Audiosignals,
 b) Übertragen des Prüf-Audiosignals vom ersten Netzwerkelement zum zweiten Netzwerkelement,
 c) Bereitstellen eines Referenz-Audiosignals, und
 d) Feststellen von Beeinträchtigungen der Übertragungsqualität der Übertragung des Prüf-Audiosignals in Abhängigkeit des vom zweiten Netzwerkelement empfangenen Prüf-Audiosignals und des Referenz-Audiosignals, wobei das empfangene Prüf-Audiosignal und das Referenz-Audiosignal zum Erzeugen eines Mischsignals (400, 410, 420) gemischt werden und der Signalverlauf des erzeugten Mischsignals (400, 410, 420) ausgewertet wird, wobei Beeinträchtigungen der Übertragungsqualität der Übertragung des Prüf-Audiosignals durch Erkennen von Amplitudenänderungen und/oder Phasensprüngen (420p) der Einhüllenden (400e, 410e) des Mischsignals (400, 410, 420) erkannt werden,
 oder

durch das Auswerten des Mischsignals (400, 410, 420) ein Paketverlust erkannt wird, wobei das Kommunikationsnetzwerk (10) für die Erkennung des Paketverlustes zumindest teilweise als paketorientiertes Netzwerk ausgebildet ist.

2. Verfahren nach Anspruch 1, wobei das vorgegebene Prüf-Audiosignal im ersten Netzwerkelement bereitgestellt wird.

3. Verfahren nach einem der Ansprüche 1 oder 2, wobei das Referenz-Audiosignal im zweiten Netzwerkelement bereitgestellt wird, und wobei das Feststellen von Beeinträchtigungen der Übertragungsqualität der Übertragung des Prüf-Audiosignals im zweiten Netzwerkelement erfolgt.

4. Verfahren nach einem der vorstehenden Ansprüche, wobei die Übertragung des Prüf-Audiosignals von dem ersten Netzwerkelement zu dem zweiten Netzwerkelement einen Übertragungsabschnitt einer Übertragung des Prüf-Audiosignals zwischen zwei Netzwerkelementen bildet.

5. Verfahren nach einem der vorstehenden Ansprüche, wobei das Prüf-Audiosignal und das Referenz-Audiosignal jeweils ein Sinuston vorgegebener gleicher Frequenz ist.

6. Verfahren nach Anspruch 5, wobei die Schritte a) bis d) wiederholt durchgeführt werden, wobei jeweils die vorgegebene gleiche Frequenz variiert wird.

7. Verfahren nach einem der vorstehenden Ansprüche, wobei das Prüf-Audiosignal zumindest abschnittsweise über ein paketorientiertes Netzwerk übertragen wird.

8. Verfahren nach einem der vorstehenden Ansprüche, wobei durch das Auswerten des Mischsignals (400, 410, 420) ein Unterschied der im ersten und zweiten Netzwerkelement zur A/D- oder D/A-Wandlung eingesetzten Taktfrequenzen erkannt wird, wobei insbesondere ein Maß für den Unterschied der Taktfrequenzen ermittelt wird.

9. Verfahren nach einem der vorstehenden Ansprüche, wobei das erste und/oder zweite Netzwerkelement ein Teilnehmerendgerät ist.

10. Netzwerkelement (110, 120, 130, 140) zum Einsatz in einem Kommunikationsnetzwerk (10), ausgebildet zum Prüfen der Übertragungsqualität einer Übertragung von einem weiteren Netzwerkelement (110 ,120, 130, 140) des Kommunikationsnetzwerkes (10), umfassend

- Mittel (133) zum Empfangen eines Prüf-Audiosignals von dem weiteren Netzwerkelement,
- Mittel (135) zum Bereitstellen eines Referenz-Audiosignals,
- einen Signalmischer (136) zum Erzeugen eines Mischsignals (400, 410, 420) aus dem empfangenen Prüf-Audiosignal und dem Referenz-Audiosignal, und
- eine Auswerteeinheit (137), welche dazu ausgebildet ist, Beeinträchtigungen der Übertragungsqualität der Übertragung des Prüf-Audiosignals in Abhängigkeit des empfangenen Prüf-Audiosignals und des Referenz-Audiosignals festzustellen, wobei Beeinträchtigungen der Übertragungsqualität der Übertragung des Prüf-Audiosignals durch Erkennen von Amplitudenänderungen und/oder Phasensprüngen (420p) der Einhüllenden (400e, 410e) des Mischsignals (400, 410, 420) erkannt werden,

oder
durch das Auswerten des Mischsignals (400, 410, 420) ein Paketverlust erkannt wird, wobei das Kommunikationsnetzwerk (10) für die Erkennung des Paketverlustes zumindest teilweise als paketorientiertes Netzwerk ausgebildet ist.

11. Netzwerkelement (110, 120, 130, 140) nach Anspruch 10, dazu ausgebildet, das bereitgestellte Referenz-Audiosignal als Prüf-Audiosignal zu einem weiteren Netzwerkelement (110, 120, 130, 140) des Kommunikationsnetzwerkes (10) zu übertragen.

12. Kommunikationsnetzwerk (10), umfassend wenigstens ein Netzwerkelement (110, 120, 130, 140) gemäß einem der Ansprüche 10 oder 11.

**Claims**

1.  A method for testing the transmission quality of a transmission from a first network element (110, 120, 130, 140) to a second network element (110, 120, 130, 140) of a communication network (10), comprising the steps of:

    a) providing a predetermined test audio signal;
    b) transmitting the test audio signal from the first network element to the second network element;
    c) providing a reference audio signal; and
    d) detecting impairments in the transmission quality of the transmission of the test audio signal on the basis of the test audio signal as received by the second network element and the reference audio signal, wherein the received test audio signal and the reference audio signal are mixed to generate a mixed signal (400, 410, 420), and the march of the generated mixed signal (400, 410, 420) is evaluated, wherein

    impairments in the transmission quality of the transmission of the test audio signal are detected by identifying amplitude changes and/or phase jumps (420p) of the envelope (400e, 410e) of the mixed signal (400, 410, 420), or wherein
    a packet loss is detected by evaluating the mixed signal (400, 410, 420), wherein for the detection of the packet loss the communication network (10) is configured as a packet-oriented network, at least partially.

2.  The method according to claim 1, wherein the predetermined test audio signal is provided in the first network element.

3.  The method according to any one of claims 1 or 2, wherein the reference audio signal is provided in the second network element, and wherein the detecting of impairments of the transmission quality of the transmission of the test audio signal is performed in the second network element.

4.  The method according to any one of the preceding claims, wherein the transmission of the test audio signal from the first network element to the second network element defines a transmission section of a transmission of the test audio signal between two network elements.

5.  The method according to any one of the preceding claims, wherein each of the test audio signal and the reference audio signal is a sinusoidal tone of a predetermined identical frequency.

6.  The method according to claim 5, wherein steps a) to d) are carried out repeatedly, wherein the predetermined identical frequency is varied in each case.

7.  The method according to any one of the preceding claims, wherein the test audio signal is transmitted via a packet-oriented network, at least in sections.

8.  The method according to any one of the preceding claims, wherein by evaluating the mixed signal (400, 410, 420), a difference is detected in the clock frequencies used in the first and second network elements for A/D or D/A conversion, wherein in particular a measure is determined for the difference in the clock frequencies.

9.  The method according to any one of the preceding claims, wherein the first and/or second network element is a subscriber terminal.

10. A network element (110, 120, 130, 140) for use in a communication network (10), adapted for testing the transmission quality of a transmission from a further network element (110, 120, 130, 140) of the communication network (10), comprising:

    - means (133) for receiving a test audio signal from said further network element;
    - means (135) for providing a reference audio signal;
    - a signal mixer (136) for generating a mixed signal (400, 410, 420) from the received test audio signal and the reference audio signal; and
    - an evaluation unit (137) which is adapted to detect impairments in the transmission quality of the transmission of the test audio signal on the basis of the received test audio signal and the reference audio signal;

    wherein impairments in the transmission quality of the transmission of the test audio signal are detected by identifying amplitude changes and/or phase jumps (420p) of the envelope (400e, 410e) of the mixed signal (400, 410, 420); or

wherein a packet loss is detected by evaluating the mixed signal (400, 410, 420), wherein for the detection of the packet loss the communication network (10) is configured as a packet-oriented network, at least partially.

11. The network element (110, 120, 130, 140) according to claim 10, configured for transmitting the provided reference audio signal as a test audio signal to a further network element (110, 120, 130, 140) of the communication network (10).

12. A communication network (10), comprising at least one network element (110, 120, 130, 140) according to any one of claims 10 or 11.

**Revendications**

1. Procédé de contrôle de la qualité de transmission d'une transmission d'un premier élément de réseau (110, 120, 130, 140) à un deuxième élément de réseau (110, 120, 130, 140) d'un réseau de communication (10), comprenant les étapes :

   a) de fourniture d'un signal audio d'essai prédéfini,
   b) de transmission du signal audio d'essai du premier élément de réseau au deuxième élément de réseau,
   c) de fourniture d'un signal audio de référence, et
   d) de constatation d'altérations de la qualité de transmission de la transmission du signal audio d'essai en fonction du signal audio d'essai reçu du deuxième élément de réseau et du signal audio de référence, le signal audio d'essai reçu et le signal audio de référence étant mélangés pour générer un signal mixte (400, 410, 420) et la variation de signal du signal mixte (400, 410, 420) généré est évaluée, où

   des altérations de la qualité de transmission de la transmission du signal audio d'essai sont repérées par repérage de modifications d'amplitude et/ou de sauts de phase (420p) des enveloppes (400e, 410e) du signal mixte (400, 410, 420),
   ou
   une perte de paquet est identifiée par l'évaluation du signal mixte (400, 410, 420), le réseau de communication (10), pour le repérage de la perte de paquet, étant conçu au moins en partie comme un réseau en mode paquet.

2. Procédé selon la revendication 1, dans lequel le signal audio d'essai prédéfini est fourni dans le premier élément de réseau.

3. Procédé selon l'une des revendications 1 et 2, dans lequel le signal audio de référence est fourni dans le deuxième élément de réseau, et dans lequel la constatation d'altérations de la qualité de transmission de la transmission du signal audio d'essai s'effectue dans le deuxième élément de réseau.

4. Procédé selon l'une quelconque des revendications précédentes, dans lequel la transmission du signal audio d'essai du premier élément de réseau au deuxième élément de réseau forme une partie de transmission d'une transmission du signal audio d'essai entre deux éléments de réseau.

5. Procédé selon l'une quelconque des revendications précédentes, dans lequel le signal audio d'essai et le signal audio de référence sont respectivement un son sinusoïdal d'une fréquence identique prédéfinie.

6. Procédé selon la revendication 5, dans lequel les étapes a) à d) sont exécutées à plusieurs reprises, la fréquence identique prédéfinie étant respectivement modifiée.

7. Procédé selon l'une quelconque des revendications précédentes, dans lequel le signal audio d'essai est transmis au moins en partie par l'intermédiaire d'un réseau en mode paquet.

8. Procédé selon l'une quelconque des revendications précédentes, dans lequel l'évaluation du signal mixte (400, 410, 420) permet de repérer une différence entre les fréquences d'horloge utilisées dans le premier et le deuxième élément de réseau pour la conversion analogique/numérique ou numérique/analogique, une grandeur pour la différence entre les fréquences d'horloge étant déterminée en particulier.

9. Procédé selon l'une quelconque des revendications précédentes, dans lequel le premier et/ou deuxième élément de réseau est un terminal utilisateur.

10. Elément de réseau (110, 120, 130, 140) destiné à être utilisé dans un réseau de communication (10), conçu pour contrôler la qualité de transmission d'une transmission d'un autre élément de réseau (110, 120, 130, 140) du réseau de communication (10), comportant :

- des moyens (133) pour la réception d'un signal audio d'essai de l'autre élément de réseau,
- des moyens (135) pour la fourniture d'un signal audio de référence,
- un mélangeur de signaux (136) pour la génération d'un signal mixte (400, 410, 420) composé du signal audio d'essai reçu et du signal audio de référence, et
- une unité d'évaluation (137), laquelle est conçue pour constater des altérations de la qualité de transmission de la transmission du signal audio d'essai en fonction du signal audio d'essai reçu et du signal audio de référence, où des altérations de la qualité de transmission de la transmission du signal audio d'essai sont repérées par repérage de modifications d'amplitude et/ou de sauts de phase (420p) des enveloppes (400e, 410e) du signal mixte (400, 410, 420),

ou
une perte de paquet est identifiée par l'évaluation du signal mixte (400, 410, 420), le réseau de communication (10), pour le repérage de la perte de paquet, étant conçu au moins en partie comme un réseau en mode paquet.

11. Elément de réseau (110, 120, 130, 140) selon la revendication 10, conçu pour transmettre le signal audio de référence fourni en tant que signal audio d'essai à un autre élément de réseau (110, 120, 130, 140) du réseau de communication (10).

12. Réseau de communication (10), comportant au moins un élément de réseau (110, 120, 130, 140) selon l'une des revendications 10 et 11.

10

120

110

Festnetz

Mobilfunknetz

210

220

Gateway

SBC

215

225

Internet

130

310

Lokales LAN

140

320

Fig. 1

132

130

VoIP-DSP

131

132        134        134a        134b        133

Prüfsignal-
Quelle

136

135

Auswerteeinheit

137

Fig. 2

Fig. 3

Fig. 4

Fig. 5

**IN DER BESCHREIBUNG AUFGEFÜHRTE DOKUMENTE**

**In der Beschreibung aufgeführte Patentdokumente**

- US 2008159166 A1

**In der Beschreibung aufgeführte Nicht-Patentliteratur**

- Frequency stability measuring techniques using digital signal processing. **M. UCHINO et al.** Electronics & Communications in Japan, Part I - Communications. Wiley, 01. Januar 2004, vol. 87, 21-23